(19) Europäisches Patentamt

European Patent Office

Office européen des brevets

(11) **EP 1 270 695 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(51) Int Cl.:
*C09J 7/02* *(2006.01)*     *C09J 7/04* *(2006.01)*

(21) Anmeldenummer: **02011110.0**

(22) Anmeldetag: **18.05.2002**

(54) **Verwendung eines mindestens einseitig mit einer kohäsiven Haftmasse beschichteten Trägermaterials zum Ummanteln von Kabelsätzen**

Use of an adhesive tape coated on one side with a cohesive mass for covering cable looms

Utilisation d'une bande adhésive revêue sur au moins une face d'une matière adhésive cohésive pour enrober des faisceaux de câbles

(84) Benannte Vertragsstaaten:
**DE ES FR GB IT**

(30) Priorität: **19.06.2001 DE 10129546**

(43) Veröffentlichungstag der Anmeldung:
**02.01.2003 Patentblatt 2003/01**

(73) Patentinhaber: **tesa AG**
**20253 Hamburg (DE)**

(72) Erfinder:
• **Himmelsbach, Peter**
**21164 Buxtehude (DE)**
• **Katsch, Ralf**
**22529 Hamburg (DE)**
• **Niemeyer, Thomas**
**24568 Kaltenkirchen (DE)**
• **Römling, Horst**
**21279 Hollenstedt (DE)**

(56) Entgegenhaltungen:
| | |
|---|---|
| **EP-A- 0 685 546** | **EP-A- 0 826 380** |
| **EP-A- 0 995 783** | **WO-A-02/14446** |
| **WO-A-02/18509** | **DE-A- 19 523 494** |
| **DE-A- 19 732 958** | **DE-A- 19 819 442** |
| **DE-A- 19 921 743** | **US-A- 5 271 999** |

**Beschreibung**

Die Erfindung betrifft die Verwendung eines mindestens einseitig mit einer kohäsiven Haftmasse beschichtetes Trägermaterial für Anwendungen bei der Kabelverarbeitung, insbesondere dem Bandagieren von Kabelsätzen, wobei die einzelnen Lagen oder Bindentouren nur auf sich selbst sicher und auf anderen Substraten - insbesondere auf den Kabeladern des Kabelsatzes - nicht oder geringfügig haften.

Kabel und Leitungen werden in der Regel durch Bandagierung, in Schläuchen und in Rohren zusammengefaßt. Hierbei entstehen sogenannte Kabelbäume. Vorteilhaft ist durch das Zusammenfassen der Kabelstränge eine Vereinfachung der Montage.

Das Bandagieren hat gegenüber den Schläuchen und Rohren die Vorteile, daß Steckverbindungen und Endgeräte vor dem Zusammenfügen des Kabelbaums angeschlagen werden können und daß durch die Bandage die einzelnen Kabel fest zusammengehalten werden, wobei ein minimaler Platzbedarf benötigt wird. Bandagieren ist flexibler bei der Umsetzung von Prozeß- und Produktänderungen. Weiter bietet die Bandagierung eine Eindämmung oder Reduzierung von Klappergeräuschen. Die Bandagierung sollte im Regelfall den mechanischen und thermischen Belastungen in der Anwendung standhalten, so daß diese den Lebenszyklen im jeweiligen Anwendungsgebiet gerecht werden. Insbesondere spielen in der Automobilindustrie, umweltgerechte, recylingfähige Produkte und Produktionskonzepte eine immer stärkere Rolle.

Derzeitige Systemlösungen beziehen sich ausschließlich auf nichthaftende Rohrsysteme oder selbstklebrige Bandagierungen.

Die Verwendung von Klebebändern mit einem Vlies als Träger zur Bandagierung von Kabelbäumen ist bekannt. So beschreibt die DE-G 94 01 037 ein Klebeband mit einem bandförmigen, textilen Träger, der aus einem Nähvlies besteht, das seinerseits aus einer aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämmungseigenschaften.

Neben dem in der genannten Schrift erwähnten Nähvlies gibt es weitere Träger, die in Klebebändern zur Kabelbaumbandagierung eingesetzt werden.

Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vliesen bekannt.

Aus der DE 199 23 399 A1 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2% und 50% der Fasern des Vlieses sind Schmelzfasern, und zwar solche aus Homo-, Copolymer- oder Bikomponentenfasern mit einem niedrigeren Erweichungs- oder Schmelzpunkt.

Beispielhaft erwähnt ist, daß die Schmelzfasem des Vlieses aus Polypropylen, Polyethylen, Polyamid, Polyester oder Copolymeren bestehen.

Ein weiteres Klebeband mit einem bandförmigen Träger aus Vliesmaterial ist in der DE 199 37 446 A1 offenbart. Das Klebeband ist zumindest einseitig mit einem Kleber beschichtet, wobei das Vlies ein Stapelfaservlies darstellt, das durch mechanische Bearbeitung verfestigt oder naßgelegt wird. Hier erfolgt die weitere Verfestigung des Stapelfaservlieses durch Zugabe von Bindemitteln, wie zum Beispiel Pulver, Folien, Gitternetze, Bindefasern. Die Bindemittel können in Wasser oder organischen Lösemittel gelöst sein und/oder als Dispersion vorliegen.

Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegende Klebeschichten unter Auflösung der Grenzflächen und vollständiger Koaleszenz der Klebeschichten eine homogene Haftklebstoff-Masse bildet.

DE 199 21 743 A1 beschreibt ein mit einer kohäsiven Haftmasse beschichtetes Trägermaterial für medizinische und technische reversible Fixierungen, das ohne Beschädiging des Untergrunds zu lösen ist. Dieses Trägermaterial ist durch eine Höchstzugkraft von mindestens 800 cN/cm, eine Haftkraft auf der Trägerrückseite von nicht weniger als 10 cN/cm und ein Flächengewicht der Haftmasse auf dem Trägermaterial von größer 3 g/m$^2$ gekennzeichnet.

Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.

Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Kohäsiv beschichtete Trägermaterialien sind für medizinische Zwecke bekannt; sie lassen sich handelsüblich unter dem Namen Elohaft ® oder Gazofix ® bei der Firma Beiersdorf erwerben.

DE G 86 24 190 beschreibt einen kohäsiven Verbandstoff, bestehend aus einem Trägermaterial und einer Beschichtung auf Basis einer Acrylharzdispersion.

Nachteilig sind hier die geringen Schereigenschaften und das Entfernen des Hilfsmittels bei der Applikation. Eine Beschreibung einer Kabelbandagierung liegt nicht vor.

DE 688 430 C offenbart ein mit Naturlatex getränktes Band, wobei das Band eine Nachbehandlung mit Essigsäure erfährt. Derartige Bänder sind jedoch unvorteilhaft hinsichtlich der Flexibilität und der textilen Anmutung.

Weiter ist das Verfahren zur Herstellung durch den zusätzlichen Arbeitsschritt der Nachbehandlung nicht vorteilhaft.

Es wird keine Anwendung bezüglich einer Kabelverbindung beschrieben.

US 2,238,878 A beschreibt eine Binde, welche mit einem Naturlatex beschichtet wird. Es wird keine Anwendung bezüglich einer Kabelverbindung beschrieben.

US 3,575,782 A offenbart ein Verfahren zur Herstellung von elastischen Umhüllungsmaterialien aus nicht gewebten faserigen Gespinsten und hochelastischen Gummi- oder Polyurethanfäden. Die verwendeten Bindemittel des nichtgewebten Materials verleihen diesem eine haftklebrige Charakteristik.

In EP 0 443 263 A1 wird eine Klebemasse mit niedrigen Tack offenbart. Es wird keine Anwendung bezüglich einer Kabelverbindung beschrieben.

Eine weitere Haftbinde wird in DE 29 12 129 A beschrieben, welche durch feinste Verteilung einer Kautschukdispersion hergestellt wird.

US 5,692,937 A1 beschreibt eine dehnfähige kohäsive Bandage, welche mit einer Polyurethandispersion beschichtet ist.

Aufgabe der Erfindung ist es, ein haftklebrig beschichtetes Trägermaterial zur Verfügung zu stellen, welches insbesondere frei von PVC-haltigen Substanzen ist, welches nur auf sich selbst haftet und zur Bandagierung von Kabelsätzen geeignet ist.

Gelöst wird diese Aufgabe durch die Verwendung eines Trägermaterials, wie es im Hauptanspruch beschrieben ist. Die Unteransprüche betreffen vorteilhafte Fortbildungen des Erfindungsgegenstands desselben sowie ein unter Verwendung des Trägermaterials ummanteltes Gut.

Demgemäß umfaßt die erfindungsgemäße Lösung die Verwendung eines mindestens einseitig mit einer kohäsiven Haftmasse beschichtetes Trägermaterial zum Ummanteln von Kabelsätzen, wobei das beschichtete Trägermaterial

- eine Höchstzugkraft von mindestens 800 cN/cm und
- eine Haftkraft auf der Trägerrückseite von nicht weniger als 10 cN/cm aufweist sowie die Haftmasse mit einem Flächengewicht von größer 3 g/m$^2$ auf dem Trägermaterial beschichtet ist und wobei die Haftmasse und das Trägermaterial PVC-frei sind.

In einer ersten vorteilhaften Ausführungsform der Erfindung ist die Haftmasse mit einem Flächengewicht zwischen 6 g/m² und 180 g/m², besonders bevorzugt zwischen 9 g/m² und 140 g/m², auf dem Trägermaterial beschichtet.

Weiter vorzugsweise ist das mindestens einseitig mit einer kohäsiven Haftmasse beschichtete Trägermaterial durch eine Höchstzugkraft-Dehnung von weniger als 1000 %, insbesondere weniger als 500 %, besonders bevorzugt durch eine Höchstzugkraft-Dehnung von 5 bis 350 % gekennzeichnet. Ganz besonders bevorzugt sind Werte zwischen 5 und 100 %, 50 bis 150 % oder 150% bis 350 %.

Speziell für bestimmte Anwendungen sollte das beschichtete Trägermaterial eine Höchstzugkraft von größer 1000 cN/cm, bevorzugt 2000 cN/cm bis 22000 cN/cm, aufweisen, damit dieses einen funktionsgerechten Einsatz zeigt.

Ferner sollte die Dehnung des beschichteten Trägermaterials bei einer Belastung von 10 N/cm weniger als 500 % sein.

Das erfindungsgemäß beschichtete Trägermaterial kann eine Haftkraft auf der Trägerrückseite von mindestens 0,2 N/cm aufweisen, besonders eine Haftkraft zwischen 0,3 N/cm und 5 N/cm, besonders bevorzugt zwischen 0,5 N/cm und 3,0 N/cm. Auf anderen Untergründen werden so gut wie keine Klebkräfte erreicht werden.

Weiter vorzugsweise ist das Trägermaterial zweiseitig beschichtet worden.

Weder das Trägermaterial, noch die Haftmasse weisen PVC als Bestandteil auf.

Als Trägermaterial können alle bekannten textilen Träger wie Gewebe, Gewirke, Gelege oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.

Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.

Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Abstandsgewebe oder -gewirke sind u. a. in zwei Artikeln beschrieben, und zwar

einem Artikel aus der Fachzeitschrift "kettenwirk-praxis 3/93", 1993, Seiten 59 bis 63 "Raschelgewirkte Abstandsgewirke" und

einem Artikel aus der Fachzeitschrift "kettenwirk-praxis 1/94", 1994, Seiten 73 bis 76 "Raschelgewirkte Abstandsgewirke"

auf deren Inhalt hiermit Bezug genommen wird und deren Inhalt Teil dieser Offenbarung und Erfindung wird.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2% und 50% der Fasern des Vlieses Schmelzfasern sind, insbesondere zwischen 5% und 40% der Fasern des Vlieses.

Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vemähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gittemetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser in-line oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Als Trägermaterialien finden weiterhin insbesondere Verwendung Laminate und Netze, aber auch Folien (zum Beispiel PP, PE, PET, PA), Schäume, Schaumstoff, geschäumte Folien und Papiere. Weiter können diese Materialien vor- beziehungsweise nachbehandelt werden. Gängige Vorbehandlungen sind Corona-Bestrahlung, Imprägnieren, Beschichten, Lackieren und Hydrophobieren; geläufige Nachbehandlungen sind Kalandern, Tempern, Kaschieren, Stanzen und Eindecken.

Eine Schwerentflammbarkeit des Trägermaterials und dem gesamten Klebeband läßt sich erzielen, indem dem Träger und/oder der Klebemasse Flammschutzmittel, zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Für die kohäsive Haftmasse kommen verschiedene Verbindungen in Frage.

Geeignet sind polymere Verbindungen natürlichen und synthetischen Ursprungs. Beispielhaft genannt sind Verbindungen auf Basis von Latex, Natur- und Synthesekautschuk und andere synthetische Polymere auf Basis von Acrylaten, Methacrylaten, Polyurethanen, Polyolefine, Polyvinylderivaten, Polyestern, Polyamiden, oder Silikonen.

Für eine geeignete Ausführung läßt sich durch eine handelsübliche Latexdispersion unter Verwendung der Aerosoltechnik eine Applikation der Haftmasse nachstellen. Die Versprühung ergibt einen mehr oder minder gleichmäßigen Auftrag von kleinen Tropfen auf dem Trägermaterial.

In einer anderen vorteilhaften Ausführung wird eine Haftmasse aus einem dispergierten, vernetzten Polyacrylsäurebutylester (w=50%, wäßrig), einem Alkyphenylpolyglykoläther und einem handelsüblichen Schaumstabilisator gebildet.

In einer anderen vorteilhaften Ausführung handelt es sich bei der Haftmasse um eine Haftschmelzmasse.

Der Erweichungspunkt der Haftschmelzmasse liegt insbesondere höher als 50 °C, da die Beschichtungstemperatur in der Regel mindestens 70 °C beträgt, bevorzugt zwischen 90 °C und 190 °C, ganz besonders bevorzugt 75 °C bis 140 °C. Gegebenenfalls kann eine Nachvernetzung durch UV- oder Elektronenstrahlen-Bestrahlung angebracht sein. Dieses hängt von dem speziellen Aufbau des Stammpolymers oder deren Zusatzstoffen ab.

Für besonders starkhaftende Systeme basiert die kohäsive Haftmasse bevorzugt auf A-B-, A-B-A-Blockcopolymeren oder deren Mischungen. Die harte Phase A ist vornehmlich Polystyrol oder dessen Derivate, und die weiche Phase B enthält Ethylen und Propylen beziehungsweise Butylen oder deren Mischungen.

Die Kette der Phase B kann auch artfremde Teile enthalten, wie zum Beispiel Isopren, Butadien oder ähnliche Stoffe. Es können auch Polystyrolblöcke in der weichen Phase B enthalten sein, und zwar bis zu 20 Gew.-%. Der gesamte Styrolanteil sollte aber stets niedriger als 65 Gew.-%, bevorzugt weniger als 40 Gew.-%, besonders bevorzugt 3 bis 35 Gew.-%, liegen. Bevorzugt werden Styrolanteile zwischen 3 und 35 Gew.-%, da ein niedrigerer Styrolanteil die Klebemasse anschmiegsamer macht.

Insbesondere die gezielte Abmischung von Di-Block- und Tri-Blockcopolymeren ist vorteilhaft, wobei ein Anteil an Di-Blockcopolymeren von kleiner 80 Gew.-% bevorzugt wird, aber auch Abmischungen mit einen Tri-Blockcopolymer von mehr als 20 Gew.-%, bevorzugt mehr als 30 Gew.-%, besonders bevorzugt 30 bis 70 Gew.-% und am meisten bevorzugt 50 bis 70 Gew.-% finden bevorzugt Verwendung.

Insbesondere die Abmischung von Blockcopolymeren auf Basis von SEPS und SEBS zeichnet sich durch ihre vielfältigen Variationsmöglichkeiten aus. Besondere Variationen der beiden Polymertypen sind im Verhältnis 1 : 100 bis 100 : 1, bevorzugt 1 : 10 bis 10: 1, besonders bevorzugt 1:3 bis 3 : 1 vorteilhaft.

Beispielsweise lassen sich die verschiedenen A/B-Diblockcopolymere des SEBS mit verschiedenen A/B/A-Triblockcopolymeren des SEPS kombinieren. Eine Zusammenstellung von verschiedenen A/B-Diblockcopolymeren des SEPS mit verschiedenen A/B/A-Triblockcopolymeren des SEBS ist ebenfalls möglich. Weiter ist auch die Kombination von verschiedenen A/B/A-Triblockcopolymeren des SEPS mit verschiedenen A/B/A-Triblockcopolymeren des SEBS möglich.

Für manche Anwendungen zeigten sich Vorteile durch das Compoundieren von A/B-Diblockcopolymeren des SEBS und des SEPS.

Die Summe der Gewichtsanteile der Blockcopolymere in der Haftmasse liegt bei mehr als 20 Gew.-%, bevorzugt mehr als Gew.-30 %, besonders bevorzugt 30 bis 70 Gew.-% und am meisten bevorzugt 50 bis 70 Gew.-%.

Besonders geeignete Ausführungen der kohäsiven, latexfreien Haftmassen weisen die nachfolgend angegebene Zusammensetzung auf:

- 5 Gew.-% bis 90 Gew.-%         Blockcopolymere,
- 5 Gew.-% bis 80 Gew.-%         Klebrigmacher wie Öle, Wachse, Harze und/oder deren Mischungen, bevorzugt Mischungen aus Harzen und Ölen,

- weniger als 60 Gew.-%         Weichmacher,
- weniger als 15 Gew.-%         Additive,
- weniger als 5 Gew.-%         Stabilisatoren.

Die als Klebrigmacher dienenden aliphatischen, cycloaliphatische oder aromatischen Öle, Wachse und Harze sind bevorzugt Kohlenwasserstofföle, -wachse und -harze, wobei sich die Öle (wie Paraffinkohlenwasserstofföle) oder die Wachse (wie Paraffinkohlenwasserstoffwachse) durch ihre Konsistenz günstig auf die Haftwirkung auswirken. In einer speziellen Form werden mindestens aliphatisches und mindestens ein aromatisches Kohlenwasserstoffharz verwendet. Als Weichmacher finden mittel- oder langkettige Fettsäuren und/oder deren Ester, sowie verschiedenste Mineralöle Verwendung. Diese Zusätze dienen dabei der Einstellung der Hafteigenschaften und der Stabilität. Gegebenenfalls kommen weitere Stabilisatoren und andere Hilfsstoffe zum Einsatz.

Ein Füllen der kohäsiven Haftmasse mit mineralischen Füllstoffen, Fasern, Mikrohohl- oder -vollkugeln ist möglich.

Die kohäsiven Haftmassen sind vorzugsweise so eingestellt, daß sie bei einer Frequenz von 0,1 rad/s eine dynamisch-komplexe Glasübergangstemperatur von weniger als -30 °C, bevorzugt von weniger als -50 °C, ganz besonders bevorzugt von -55 °C bis -150 °C, aufweisen.

Insbesondere für spezielle Kabelbandagiertechniken sind hohe Anforderungen bezüglich der Hafteigenschaften gestellt. Für eine ideale Anwendung sollte die Haftmasse keine Anfaßklebrigkeit auf dem Kabelstrang aufweisen. Weiterhin ist, damit es zu keinem Verrutschen kommt, eine hohe Scherfestigkeit der Haftmasse notwendig.

Durch die gezielte Absenkung der Glasübergangstemperatur der Haftklebemasse infolge der Auswahl der Klebrigmacher, der Weichmacher sowie der Polymermolekülgröße und der Molekularverteilung der Einsatzkomponenten wird die notwendige funktionsgerechte Haftung auf sich selbst, also der Trägerrückseite des Flächengebildes erreicht.

Die hohe Scherfestigkeit der hier eingesetzten Haftmasse wird durch die hohe Kohäsivität des Blockcopolymeren erreicht. Die geringe Anfaßklebrigkeit ergibt sich durch die eingesetzte Palette an Klebrigmachem und Weichmachern in Kombination mit dem Blockcopolymer.

Die Produkteigenschaften wie Anfaßklebrigkeit, und Scherstabilität lassen sich mit Hilfe einer dynamisch-mechanischen Frequenzmessung gut quantifizieren. Hierbei wird ein schubspannungsgesteuertes Rheometer verwendet.

Die Ergebnisse dieser Meßmethode geben Auskunft über die physikalischen Eigenschaften eines Stoffes durch die Berücksichtigung des viskoelastischen Anteils. Hierbei wird bei einer vorgegebenen Temperatur die kohäsive Haftmasse zwischen zwei planparallelen Platten mit variablen Frequenzen und geringer Verformung (linear viskoelastischer Bereich) in Schwingungen versetzt. Über eine Aufnahmesteuerung wird computerunterstützt der Quotient ($Q = \tan \delta$) zwischen dem Verlustmodul (G" viskoser Anteil) und dem Speichermodul (G' elastischer Anteil) ermittelt.

$$Q = \tan \delta = G''/G'$$

Für das subjektive Empfinden der Anfaßklebrigkeit (Tack) wird eine hohe Frequenz gewählt sowie für die Scherfestigkeit eine niedrige Frequenz.

Eine niedriger Zahlenwert bedeutet eine geringe Anfaßklebrigkeit und eine gute Scherstabilität.

| Bezeichnung | Scherfestigkeit niedrige Frequenz/RT | Anfaßklebrigkeit hohe Frequenz/RT |
|---|---|---|
| Haftmasse A | $\tan \delta = 0,06 \pm 0,03$ | $\tan \delta = 0,05 \pm 0,03$ |
| Haftmasse B | $\tan \delta = 0,22 \pm 0,03$ | $\tan \delta = 0,14 \pm 0,03$ |

Bei erfindungsgemäßen Haftmassen ist das Verhältnis des viskosen Anteils zum elastischen Anteil bei einer Frequenz von 100 rad/s bei 25 °C kleiner 0,4.

In einer besonderen Ausführung sind die Verhältnisse des viskosen Anteils zum elastischen Anteil zwischen den Werten 0,02 und 0,37, besonders bevorzugt zwischen 0,04 und 0,28.

Weiter vorzugsweise weisen die Haftmassen auf ein Verhältnis des viskosen Anteils zum elastischen Anteil bei einer Frequenz von 0,1 rad/s bei 25 °C kleiner 0,5, bevorzugt zwischen 0,35 und 0,02, ganz besonders bevorzugt zwischen 0,3 und 0,05.

Die Haftwerte (Haftseite zu Haftseite) im 180°-Winkel der Probebeschichtungen auf einem Polyesterfilm betragen für die Haftmasse A bei einem Masseauftrag von 20 g/m² 22 cN/cm und für die Haftmasse B bei einem Masseauftrag 18 g/m² 37 cN/cm.

In einer weiteren bevorzugten Ausführungsform weist die Klebemasse eine Hazen-Zahl von weniger als 3 auf, bevorzugt 0 bis 2.

Die Hazen-(Farb)zahl (nach dem amerikanischen Wasseringenieur A. Hazen) ist die Anzahl mg Platin [als Kaliumhexachloroplatinat(IV) mit Cobald(II)-chloridhexahydrat im Verhältnis 1,246:1 in 1000 ml wäßriger Salzsäure gelöst], die in gleicher Schichtdicke die (annähernd) gleiche Farbe wie die Probe aufweist.

Als bevorzugtes Verfahren zur Herstellung einer offenporigen, luft- und wasserdampfdurchlässigen kohäsiven Beschichtung der Haftmasse auf dem Trägermaterial kann die Spinntechnologie zur Applikation von thermoplastischen Kunststoffen und Klebern herangezogen werden.

Das kontaktlose Beschichten und. Auftragen von Haftmassen in Form von Haftschmelzmassen durch Spinnen oder Sprühen mit Druckluft oder inerten Gasen findet bereits vielfach erfolgreichen Einsatz.

Bei hohen Anforderungen an Gleichmäßigkeit und geringes Flächengewicht zeigen sich bei hohen Viskositäten jedoch enge Grenzen für die Beschichtung auf. Besonders bei Applikationen von höherviskosen Klebstoffen über 10 Pa*s tritt eine Neigung zum starken "Klecksen" auf. Aufgrund wissenschaftlicher Grundlagenforschung zur Sprühstrahltheorie wurden deshalb spezielle Sprühverfahren für höherviskose (hochmolekulare) Thermoplaste entwickelt.

Mit dem Meltspin-, Acufiber- und Durafiber-Verfahren sind heute Thermoplaste auf dem Pressur-Sensitivsektor bis 2000 Pa*s bei 200° C verarbeitbar. Damit wird eine Breite von Einsatzmöglichkeiten auf dem Sektor des Sprühens von thermoplastischen Klebstoffen möglich.

Die Vorteile dieser Auftragstechnik wie berührungsloses, geometrieunabhängiges Beschichten bei gleichzeitiger geringer Wärmebelastung der Träger eröffnet völlig neue Anwendungen für die Kabelsatzindustrie.

Die Vielzahl der Verfahren werden beispielhaft von Acumeter, J+M-Laboratories, Dynafiber, ITO Dynatex Nordson beschrieben. Allen gleich sind die Strömungsvorgänge in den Sprühdüsen. Die geschmolzenen thermoplastischen Kunststoffe zählen dabei zur Gruppe der nichtnewtonschen Flüssigkeiten mit strukturviskosem Fließverhalten, d.h., Schubspannung und Geschwindigkeit der Beschichtung sind nicht linear miteinander verbunden. Die als Schmelzklebstoffe gebräuchlichsten thermoplastischen Polymere bestehen aus linearen und/oder verzweigten Kettenmotekülen. Beim Vorgang des aerodynamischen Verstreckens wächst die Fließgeschwindigkeit am Sprühfaden und die Moleküle werden mehr und mehr entflochten und orientieren sich in der Strömungsrichtung.

Aus diesem Grunde haben alle Düsen ein Innenmischprinzip vorgesehen, bei dem die Klebstoffe innerhalb der Düsenkammer schon von strömender Druckluft umflossen werden. Der engste Spalt ist damit der Düsenaustritt. Dabei kann der Austrittsspalt rund oder schlitzförmig sein. Wird dieser Sprühfaden auf ein Substrat gesprüht, so entsteht ein sogenanntes Wirrvlies, dessen Struktur in sich verknüpft ist. Das Wirrvlies besteht aus einer regellosen, homogenen Anordnung eines verschlungenen Endlosfadens.

Die vliesartig versponnene, über eine beliebig von der Beschichtungsbreite abhängende Anreihung von Düsen kontaktlos aufgetragene Kleberschicht verfügt über eine im Vergleich zu vollflächigen Beschichtungen vielfach höhere freie Oberfläche.

Ergänzend hierzu bietet auch das Spinnverfahren ebenfalls einige verfahrenstechnische Möglichkeiten für den Einsatz von partiellen Beschichtungen für Haftkleber:

Weiter ist es möglich, Bestandteile des Trägermaterials zu be- oder umspinnen. Beispielhaft können die Fäden der eines Gewebes oder Gewirkes umsponnen sein, so die eigentliche Beschichtung nur einseitig erfolgt, und dennoch ein guter Lagenverbund entstehen kann.

Eine abgewandelte funktionsgerechte Verwendung des Trägermaterials wird durch das Schäumen der Klebemassen erreicht.

Die zu verwendenden Haftmassen werden dabei bevorzugt mit inerten Gasen wie Stickstoff, Kohlendioxid, Edelgasen, Kohlenwasserstoffen oder Luft oder deren Gemischen geschäumt. In manchen Fällen hat sich ein Aufschäumen zusätzlich durch thermische Zersetzung gasentwickelnder Substanzen wie Azo-, Carbonat- und Hydrazid-Verbindungen als geeignet erwiesen.

Der Schäumungsgrad, d.h. der Gasanteil, sollte mindestens etwa 5 Vol.-% betragen und kann bis zu etwa 85 Vol.-% reichen. In der Praxis haben sich Werte von 10 Vol.-% bis 75 Vol.-%, bevorzugt 50 Vol.-%, gut bewährt. Wird bei relativ hohen Temperaturen von ungefähr 100 °C und vergleichsweise hohem Innendruck gearbeitet, entstehen sehr offenporige Klebstoffschaumschichten, die besonders gut luft- und wasserdampfdurchlässig sind.

Die vorteilhaften Eigenschaften der Vorrichtung sind die gute Anschmiegsamkeit auch an unebenen Flächen durch die Elastizität und Plastizität der geschäumten Vorrichtung

Ein besonders geeignetes Verfahren zur Herstellung der erfindungsgemäß geschäumten Haftmassen arbeitet nach dem Schaum-Mix-System. Hierbei wird die thermoplastische Klebemasse unter hohem Druck bei einer Temperatur über dem Erweichungspunkt (ungefähr 120 °C) mit den vorgesehenen Gasen wie zum Beispiel Stickstoff, Luft oder Kohlendioxid in unterschiedlichen Volumenanteilen (etwa 10 Vol.-% bis 80 Vol.-%) in einem Stator/Rotorsystem umgesetzt.

Während der Gasvordruck größer 100 bar ist, betragen die Mischdrucke Gas/Thermoplast im System 40 bis 100 bar, bevorzugt 40 bis 70 bar. Der so hergestellte Haftklebeschaum kann anschließend über eine Leitung in das Auftragswerk gelangen. Bei dem Auftragswerk finden handelsübliche Düsen, Extruder- oder Kammersysteme Verwendung.

Durch die Schäumung der Vorrichtung und die dadurch entstandenen offenen Poren in der Masse sind bei Verwendung eines an sich porösen Trägers die mit der Vorrichtung beschichteten Produkte gut wasserdampf- und luftdurchlässig. Die benötigte Haftklebermenge wird erheblich reduziert ohne Beeinträchtigung und Wirkungsweise der Eigenschaften.

Ferner kann der Auftrag in Form von polygeometrischen Kalotten erfolgen und ganz besonders von solchen Kalotten, bei denen das Verhältnis Durchmesser zu Höhe kleiner 5:1 ist. Weiterhin ist auch der Aufdruck anderer Formen und Muster auf dem Trägermaterial möglich, so beispielsweise ein Druckbild in Form alphanumerischer Zeichenkombinationen oder Muster wie Gitter, Streifen und Zickzacklinien.

Die kohäsive Haftmasse kann gleichmäßig auf dem Trägermaterial verteilt sein, sie kann aber auch funktionsgerecht für das Produkt über die Fläche unterschiedlich stark oder dicht aufgetragen sein.

Das Prinzip des Thermosiebdrucks besteht in der Verwendung einer rotierenden beheizten, nahtlosen, trommelförmigen perforierten Rundschablone, die über eine Düse mit der bevorzugten Masse beschickt wird. Eine speziell geformte Düsenlippe (Rund- oder Vierkantrakel) preßt die über einen Kanal eingespeiste Masse durch die Perforation der Schablonenwand auf die vorbeigeführte Trägerbahn. Diese wird mit einer Geschwindigkeit, die der Umgangsgeschwindigkeit der rotierenden Siebtrommel entspricht, mittels einer Gegendruckwalze gegen den Außenmantel der beheizten Siebtrommel geführt.

Die Ausbildung der kleinen dotierten Kalotten geschieht dabei nach folgendem Mechanismus:

Der Düsenrakeldruck fördert die dotierte Masse durch die Siebperforation an das Trägermaterial. Die Größe der ausgebildeten Kalotten wird durch den Durchmesser des Siebloches vorgegeben. Entsprechend der Transportgeschwindigkeit der Trägerbahn (Rotationsgeschwindigkeit der Siebtrommel) wird das Sieb vom Träger abgehoben. Bedingt durch die Adhäsion der Haftklebemasse in der Schmelze und die innere Kohäsion des Hotmelts wird von der auf dem Träger bereits haftenden Basis der Kalotten der in den Löchern begrenzte Vorrat an Heißschmelzhaftklebemasse konturenscharf abgezogen beziehungsweise durch den Rakeldruck auf den Träger gefördert.

Nach Beendigung dieses Transportes formt sich, abhängig von der Rheologie der Heißschmelzhaftklebemasse, über der vorgegebenen Basisfläche die mehr oder weniger stark gekrümmte Oberfläche der Kalotte. Das Verhältnis Höhe zur Basis der Kalotte hängt vom Verhältnis Lochdurchmesser zur Wandstärke der Siebtrommel und den physikalischen Eigenschaften (Fließverhalten, Oberflächenspannung und Benetzungswinkel auf dem Trägermaterial) der Haftklebemasse ab.

Bei der Siebschablone im Thermosiebdruck kann das Steg/Loch-Verhältnis kleiner 10:1 sein, bevorzugt kleiner oder gleich 1:1, insbesondere gleich 1:10.

Der beschriebene Bildungsmechanismus der Kalotten erfordert bevorzugt saugfähige oder zumindest von der kohäsiven Masse benetzbare Trägermaterialien. Nichtbenetzende Trägeroberflächen müssen durch chemische oder physikalische Verfahren vorbehandelt werden. Dies kann durch zusätzliche Maßnahmen wie zum Beispiel Coronaentladung oder Beschichtung mit die Benetzung verbessernden Stoffen geschehen.

Mit dem aufgezeigten Druckverfahren kann die Größe und Form der Kalotten definiert festgelegt werden. Die für die Anwendung relevanten Klebkraftwerte, die die Qualität der erzeugten Produkte bestimmen, liegen bei sachgerechter Beschichtung in sehr engen Toleranzen. Der Basisdurchmesser der Kalotten kann von 10 $\mu$m bis 5000 $\mu$m gewählt werden, die Höhe der Kalotten von 20 $\mu$m bis ca. 2000 $\mu$m, bevorzugt 50 $\mu$m bis 1000 $\mu$m, wobei der Bereich kleiner Durchmesser für glatte Träger, der mit größerem Durchmesser und größerer Kalottenhöhe für rauhe oder stark porige Trägermaterialien vorgesehen ist.

Die Positionierung der Kalotten auf dem Träger wird durch die in weiten Grenzen variierbare Geometrie des Auftragswerkes, zum Beispiel Gravur- oder Siebgeometrie, definiert festgelegt. Mit Hilfe der aufgezeigten Parameter kann über einstellbare Größen das gewünschte Eigenschaftsprofil der Beschichtung, abgestimmt auf die verschiedenen Trägermaterialien und Anwendungen, sehr genau eingestellt werden.

Das Trägermaterial wird bevorzugt mit einer Geschwindigkeit von größer 2 m/min, bevorzugt 20 bis 450 m/min, beschichtet, wobei die Beschichtungstemperatur größer als die Erweichungstemperatur zu wählen ist.

Der prozentuale Anteil der mit der Haftmasse beschichteten Fläche sollte mindestens 10 % betragen und kann bis zu ungefähr 95 % reichen, für spezielle Produkte bevorzugt 40 % bis 60 % sowie 70 % bis 95 %. Dieses kann gegebenenfalls durch Mehrfachapplikation oder spezielle Verformungsschritte erreicht werden, wobei gegebenenfalls auch Massen mit unterschiedlichen Eigenschaften eingesetzt werden können.

Je nach Trägermaterial und dessen Temperaturempfindlichkeit kann Masse direkt aufgetragen sein oder zuerst auf einen Hilfsträger aufgebracht und dann auf den endgültigen Träger transferiert werden. Auch ein nachträgliches Kalandern des beschichteten Produktes und/oder eine Vorbehandlung des Trägers, wie Coronabestrahlung, zur besseren Verankerung der Klebeschicht kann vorteilhaft sein.

Weiterhin kann eine Behandlung der Masse mit einer Elektronenstrahl-Nachvernetzung oder einer UV-Bestrahlung zu einer Verbesserung der gewünschten Eigenschaften führen.

Schließlich kann das beschichtete Trägermaterial nach dem Beschichtungsvorgang mit einem klebstoffabweisenden Trägermaterial, wie silikonisiertes Papier, eingedeckt oder mit einer Polsterung versehen werden.

Anschließend können die beschichteten und/oder aufgerollten Trägermaterialien in der Anwendung angepaßten Größen gestanzt oder geschnitten werden.

Im folgenden sollen anhand mehrerer Figuren Vorrichtungen zur Herstellung erfindungsgemäßer Trägermaterialien dargestellt werden.

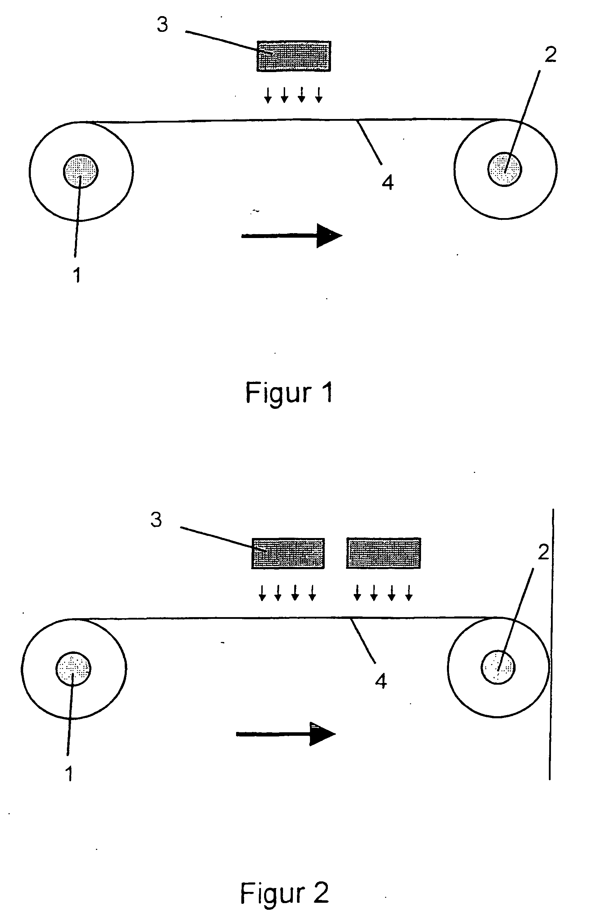

Im einfachsten Fall nach Figur 1 besteht die Vorrichtung aus einer Ab- (1) und Aufrollung (2) sowie der Trägerbahn (4) und der Spinndüse (3).

Zur Optimierung der Eigenschaften können gemäß Figur 2 auch mehrere Düsen (3) in Reihe geschaltet werden.

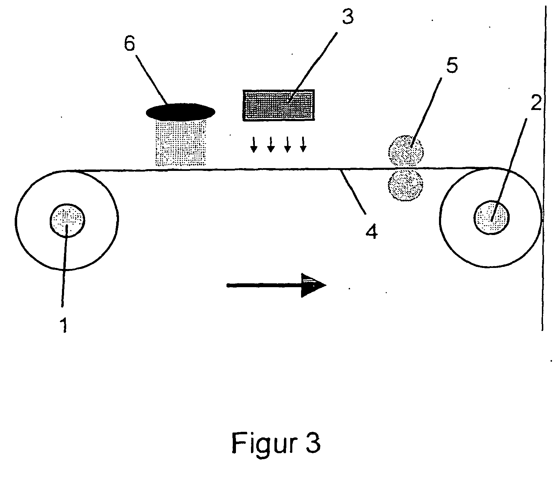

Für spezielle Träger kann eine Corona-Vorbehandlung (6) oder nachträgliche Kalanderstation in den Versuchsaufbau mit aufgenommen werden, wie es in Figur 3 gezeigt ist.

Ferner ist es möglich, die beschichteten Seiten des Trägermaterials unterschiedlich auszurüsten. Vorteilhaft kann eine Kombination aus einer versponnenen Haftmasse mit einer partiellen Punktbeschichtung gewählt werden. Die Haftmassen der verschiedenen Seiten können gegebenenfalls auch unterschiedlich sein. Eine besondere Ausführung weist auf einer Seite eine SEBS-Haftmasse auf, während die andere Seite eine SEPS basierende Haftmasse beinhaltet.

Zwei Ausführungsformen haben sich als besonders wertvoll zum Ummanteln von Kabelsätzen herausgestellt.

In der ersten Variante des mindestens einseitig mit einer kohäsiven Haftmasse beschichteten Trägermaterials

- weist das mit Haftmasse beschichtete Trägermaterial eine Luftdurchlässigkeit von mehr als 15 cm$^3$/(cm$^2$ x s) und eine Wasserdampfdurchlässigkeit von mehr als 500 g/(24 x s) auf,
- beinhaltet die Haftmasse einen oder mehrere SEBS- und/oder SEPS-Tri-Blockcopolymertype/n,
- beträgt die Summe der Gewichtsprozente aller Blockcopolymeren in der Haftmasse 30 Gew.-% bis 70 Gew.-%,
- beinhaltet die Haftmasse ein aliphatisches und ein aromatisches Kohlenwasserstoffharz,
- weist das Trägermaterial einen Auftrag der Haftmassen von 6 bis 180 g/m$^2$ auf, und
- ist die HAZEN-Zahl der Haftmasse kleiner 3.
  In der zweiten Variante des mindestens einseitig mit einer kohäsiven Haftmasse beschichteten Trägermaterials
- weist das mit Haftmasse beschichtete Trägermaterial eine Luftdurchlässigkeit von mehr als 15 cm$^3$/(cm$^2$ x s) und eine Wasserdampfdurchlässigkeit von mehr als 500 g/(24 x s) auf,
- beinhaltet die Haftmasse einen oder mehrere SEPS- und/oder SEBS-A/B-Diblockcopolymertype/n,
- beträgt die Summe der Gewichtsprozente aller Blockcopolymeren in der Haftmasse 30 Gew.-% bis 70 Gew.-%,
- beinhaltet die Haftmasse ein aliphatisches und ein aromatisches Kohlenwasserstoffharz,
- weist das Trägermaterial einen Auftrag der Haftmassen von 6 bis 180 g/m$^2$ auf, und
- ist die HAZEN-Zahl der Haftmasse kleiner 3.

Sodann umfaßt die Erfindung ein mit dem oben näher beschriebenen Klebeband ummantelten Kabelsatz, wobei das Klebeband in einer spiralförmigen Bewegung um den Kabelsatz geführt ist.

Durch die erfindungsgemäße Verwendung ergeben sich viele Vorteile, die auch der Fachmann derartig nicht vorhergesehen hat.

Durch das Nichtverkleben auf dem Kabeladern eine größere Beweglichkeit und Flexibilität des Kabelsatzes erreicht. Dieses tritt sowohl beim Verbauen als auch beim Gebrauch des Produkts in Betracht. Ferner wird weiter die Trennbarkeit von Bandage und Kabeladern bei der Demontage des Fahrzeuges/Gerätes durch ein Längsaufschlitzen der Bandage und anschließender Entnahme sehr vereinfacht.

Durch die PVC-freie Ausgestaltung des Produkts läßt sich ein einfaches Entsorgen der Bandagierung ebenfalls vorteilhaft ermöglichen.

Im folgenden sollen Beispiele der Erfindung beschrieben werden, ohne die Erfindung dadurch unnötig einschränken zu wollen.

**Beispiel 1**

Dieses Beispiel beschreibt einen Vliesstoff aus drei Lagen mit einer flexiblen Mittelschicht aus Polypropylen und zwei äußeren Lagen bestehend aus der Haftmasse.
Die Höchstzugkraft des Flächengebildes betrug nach dem Verfestigen 25 N/cm die Höchstzugkraft-Dehnung betrug 48 %. Das Flächengewicht der Mittelschicht betrug 33 g/m$^2$, die der äußeren Lagen betrugen 17 und 5 g/m$^2$.

Die Haftmasse setzte sich wie folgt zusammen:

|  | Gewichtsteile |
|---|---|
| • ein SEPS Blockcopolymer (Septon 2002, Kuraray) | 100 |

Tabelle fortgesetzt

|  | Gewichtsteile |
|---|---|
| • ein aromatisches Kohlenwasserstoffharz (Kristalex F85, Hercules) | 38 |
| • ein aliphatisches Kohlenwasserstoffharz (Escorez 5380, Exxon) | 38 |
| • ein Mineralöl (Odina G33) | 75 |
| • lrganox 1010 | 2 |

Die Haftmasse wurde bei 185 °C in einem Thermomischer homogenisiert. Der tan $\delta$ der Haftmasse betrug bei 25 °C und einer Frequenz von 100 rad/s 0,14.
Die Haftmasse wurde mit einer Düse versponnen und flächig auf den Träger appliziert. Die direkte, flächige Beschichtung wurde bei einer Temperatur von 137 °C mit einer Bahngeschwindigkeit von 35 m/min durchgeführt. Die Haftkraft wurde mit 13 cN/cm bestimmt.

**Beispiel 2**

Für eine spezielle Kabelbandagierung wurde eine sehr offene Gaze beschichtet. Die Höchstzugkraft des Flächengebildes betrug nach dem Verfestigen 13 N/cm die Höchstzugkraft-Dehnung betrug 21 %. Das Flächengewicht der Gaze betrug 32 g/m$^2$.

Die Haftmasse setzte sich wie folgt zusammen:

|  | Gewichtsteile |
|---|---|
| ein SEBS Blockcopolymer (Kraton G 1652, Shell) | 100 |
| ein aromatisches Kohlenwasserstoffharz (Kristalex F85, Hercules) | 28 |
| ein aliphatisches Kohlenwasserstoffharz (Escorez 5380, Exxon) | 12 |
| ein Mineralöl (Pioneer 2076, Hansen & Rosenthal) | 60 |
| lrganox 1010 | 2 |

Die Haftmasse wurde bei 180 °C in einem Thermomischer homogenisiert. Der tan 8-Wert der Haftmasse gemessen bei 25 °C und einer Frequenz von 100 rad/s betrug 0,05. Die Haftmasse wurde mit einer Düse versponnen und flächig mit 20 g/m$^2$ je Seite auf den Träger appliziert. Die direkte, flächige Beschichtung wurde bei einer Temperatur von 137 °C mit einer Bahngeschwindigkeit von 35 m/min durchgeführt. Die Haftkraft wurde mit 63 cN/cm bestimmt.

**Beispiel 3**

Für eine spezielle Kabelbandagierung wurde eine sehr offene Gaze beschichtet. Die Höchstzugkraft des Flächengebildes betrug nach dem Verfestigen 13 N/cm die Höchstzugkraft-Dehnung betrug 21 %. Das Flächengewicht der Gaze betrug 32 g/m$^2$.

Die Haftmasse setzt sich wie folgt zusammen:

|  | Gewichtsteile |
|---|---|
| Polyacrylsäurebutylesterdispersion (vemetzt, 50% w) | 1000 |
| Alkyphenylpolyglykoläther (Netzmittel) | 2 |
| Acrylatschlichte (Schaumstabilisator) | 10 |

Die Gaze wurde im Aerosol-Verfahren beidseitig mit 10 g/m$^2$ beschichtet und getrocknet. Die Haftkraft auf der Trägerrückseite betrug 70 cN/cm.

**Patentansprüche**

**1.** Verwendung eines mindestens einseitig mit einer kohäsiven, auf sich selbst haftenden Haftmasse beschichteten Trägermaterials zum Ummanteln von Kabelsätzen,
**dadurch gekennzeichnet, dass**
das beschichtete Trägermaterial eine Höchstzugkraft von mindestens 800 cN/cm und eine Haftkraft auf der Trägerrückseite von nicht weniger als 10 cN/cm aufweist und die Haftmasse mit einem Flächengewicht von größer 3 g/m$^2$

auf dem Trägermaterial beschichtet ist und wobei die Haftmasse und das Trägermaterial PVC-frei sind.

2. Verwendung eines mindestens einseitig mit einer kohäsiven Haftmasse beschichteten Trägermaterials gemäß Anspruch 1, **dadurch gekennzeichnet, dass** die Haftmasse mit einem Flächengewicht zwischen 6 g/m$^2$ und 180 g/m$^2$ auf dem Trägermaterial beschichtet ist.

3. Verwendung eines mindestens einseitig mit einer kohäsiven Haftmasse beschichteten Trägermaterials gemäß Anspruch 2, **dadurch gekennzeichnet, dass** die Haftmasse mit einem Flächengewicht zwischen 9 g/m$^2$ und 140 g/m$^2$ auf dem Trägermaterial beschichtet ist.

4. Verwendung eines mindestens einseitig mit einer kohäsiven Haftmasse beschichteten Trägermaterials nach mindestens einem der vorangegangenen Ansprüchen, **dadurch gekennzeichnet, dass** die Höchstzugkraft-Dehnung weniger als 1000 % beträgt.

5. Verwendung eines mindestens einseitig mit einer kohäsiven Haftmasse beschichteten Trägermaterials gemäß Anspruch 4, **dadurch gekennzeichnet, dass** die Höchstzugkraft-Dehnung weniger als 500 % beträgt.

6. Verwendung eines mindestens einseitig mit einer kohäsiven Haftmasse beschichteten Trägermaterials nach mindestens einem der vorangegangenen Ansprüchen, **dadurch gekennzeichnet, dass** das Trägermaterial aus einem textilen Träger besteht wie Vlies, Gewebe oder Gewirke.

7. Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse eine Haftschmelzmasse ist.

8. Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse bei einer Frequenz von 0,1 rad/s eine dynamisch-komplexe Glasübergangstemperatur von weniger als -30 °C aufweist und/oder die Haftmasse bei einer Temperatur von 25 °C und einer Frequenz von 100 rad/s einen tan δ von weniger als 0,4 aufweist.

9. Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse auf Blockcopolymerbasis aufgebaut ist.

10. Verwendung eines mindestens einseitig mit einer kohäsiven Haftmasse beschichteten Trägermaterials gemäß Anspruch 9, **dadurch gekennzeichnet, dass** die Haftmasse auf Blockcopolymerbasis aus A-B- oder A-B-A-Blockcopolymeren oder deren Mischungen aufgebaut ist, wobei Phase A vornehmlich Polystyrol oder dessen Derivate und Phase B Ethylen, Propylen, Butylen, Butadien, Isopren oder deren Mischungen sind.

11. Verwendung eines mindestens einseitig mit einer kohäsiven Haftmasse beschichteten Trägermaterials nach mindestens einem der vorangegangenen Ansprüchen, **dadurch gekennzeichnet, dass** der gesamte Styrolanteil im Polymer der Haftmasse niedriger als 65 Gew.-% ist.

12. Verwendung eines mindestens einseitig mit einer kohäsiven Haftmasse beschichteten Trägermaterials gemäß Anspruch 11, **dadurch gekennzeichnet, dass** der gesamte Styrolanteil im Polymer der Haftmasse weniger als 40 Gew.-% ist.

13. Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse mit einem Inertgas geschäumt ist und dass der Schäumungsgrad 5 bis 85 Vol.-% betrug.

14. Verwendung eines mindestens einseitig mit einer kohäsiven Haftmasse beschichteten Trägermaterials nach mindestens einem der vorangegangenen Ansprüchen, **dadurch gekennzeichnet, dass** das Trägermaterial mindestens zweiseitig einen Auftrag der Haftmassen von 6 bis 180 g/m$^2$ aufweist, wobei die

Haftmasse der Seite A einen oder mehrere SEBS-Di- oder Triblockcopolymertype/n und die Haftmasse der Seite B einen oder mehrere SEPS-Di- oder Triblockcopolymertype/n beinhaltet.

**15.** Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse partiell aufgetragen ist.

**16.** Verwendung eines mindestens einseitig mit einer kohäsiven Haftmasse beschichteten Trägermaterials gemäß Anspruch 15, **dadurch gekennzeichnet, dass** die Haftmasse in Form von polygeometrischen Kalotten aufgetragen ist.

**17.** Verwendung eines mindestens einseitig mit einer kohäsiven Haftmasse beschichteten Trägermaterials nach mindestens einem der vorangegangenen Ansprüchen, **dadurch gekennzeichnet, dass** die Haftschmelzklebemasse durch Rasterdruck, Thermosiebdruck oder Tiefdruck aufgebracht ist.

**18.** Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse mindestens ein aliphatisches Kohlenwasserstoffharz und mindestens ein aromatisches Kohlenwasserstoffharz beinhaltet.

**19.** Verwendung eines mindestens einseitig mit einer kohäsiven Haftmasse beschichteten Trägermaterials nach mindestens einem der vorangegangenen Ansprüchen, **dadurch gekennzeichnet, dass** die Haftmasse eine Hazen-Zahl von weniger als drei aufweist.

**20.** Verwendung eines mindestens einseitig mit einer kohäsiven Haftmasse beschichteten Trägermaterials nach mindestens einem der vorangegangenen Ansprüchen, **dadurch gekennzeichnet, dass** das mit Haftmasse beschichtete Trägermaterial eine Luftdurchlässigkeit von mehr als 15 $cm^3/(cm^2 \times s)$ und eine Wasserdampfdurchlässigkeit von mehr als 500 g/(24 x s) aufweist, die Haftmasse einen oder mehrere SEBS- und/oder SEPS-Tri-Blockcopolymertype/n beinhaltet, die Summe der Gewichtsprozente aller Blockcopolymeren in der Haftmasse 30 Gew.-% bis 70 Gew.-% beträgt, die Haftmasse ein aliphatisches und ein aromatisches Kohlenwasserstoffharz beinhaltet, das Trägermaterial einen Auftrag der Haftmassen von 6 bis 180 $g/m^2$ aufweist, die HAZEN-Zahl kleiner 3 ist.

**21.** Verwendung eines mindestens einseitig mit einer kohäsiven Haftmasse beschichteten Trägermaterials nach mindestens einem der vorangegangenen Ansprüchen, **dadurch gekennzeichnet, dass** das mit der Haftmasse beschichtete Trägermaterial eine Luftdurchlässigkeit von mehr als 15 $cm^3/(cm^2 \times s)$ und eine Wasserdampfdurchlässigkeit von mehr als 500 g/(24 x s) aufweist, die Haftmasse einen oder mehrere SEPS- und/oder SEBS-A/B-Diblockcopolymertype/n beinhaltet, die Summe der Gewichtsprozente aller Blockcopolymeren in der Haftmasse 30 Gew.-% bis 70 Gew.-% beträgt, die Haftmasse ein aliphatisches und ein aromatisches Kohlenwasserstoffharz beinhaltet, das Trägermaterial einen Auftrag der Haftmassen von 6 bis 180 $g/m^2$ aufweist, die HAZEN-Zahl kleiner 3 ist.

**22.** Mit einem Klebeband ummantelter Kabelsatz, wobei das Klebeband gemäß zumindest einem der vorherigen Ansprüchen in einer spiralförmigen Bewegung um den Kabelsatz geführt ist.

**Claims**

**1.** Use of a backing material coated at least on one side with a cohesive adhesive - i.e. cold seal - self-adhesive composition, for wrapping cable harnesses, **characterized in that** the coated backing material has an ultimate tensile strength of at least 800 cN/cm and an adhesive strength on the reverse of the backing of not less than 10 cN/cm and the backing material is coated with the cold seal composition with a weight per unit area of greater than 3 $g/m^2$ and the cold seal composition and the backing material are PVC-free.

**2.** Use of a backing material coated at least on one side with a cold seal composition according to Claim 1, **characterized in that** the backing material is coated with the cold seal composition with a weight per unit area of between 6 $g/m^2$

and 180 g/m$^2$.

3. Use of a backing material coated at least on one side with a cold seal composition according to Claim 2, **characterized in that** the backing material is coated with the cold seal composition with a weight per unit area of between 9 g/m$^2$ and 140 g/m$^2$.

4. Use of a backing material coated at least on one side with a cold seal composition according to at least one of the preceding claims, **characterized in that** the ultimate tensile elongation is less than 1000%.

5. Use of a backing material coated at least on one side with a cold seal composition according to Claim 4, **characterized in that** the ultimate tensile elongation is less than 500%.

6. Use of a backing material coated at least on one side with a cold seal composition according to at least one of the preceding claims, **characterized in that** the backing material comprises a textile backing such as nonwovens, wovens or knits.

7. Use of a backing material coated at least on one side with a cold seal composition according to at least one of the preceding claims, **characterized in that** the cold seal composition is a hotmelt cold seal composition.

8. Use of a backing material coated at least on one side with a cold seal composition according to at least one of the preceding claims, **characterized in that** the cold seal composition has a dynamic-complex glass transition temperature at a frequency of 0.1 rad/s of less than -30°C and/or the cold seal composition has a tan δ at a temperature of 25°C and a frequency of 100 rad/s of less than 0.4.

9. Use of a backing material coated at least on one side with a cold seal composition according to at least one of the preceding claims, **characterized in that** the cold seal composition is built up on a block copolymer basis.

10. Use of a backing material coated at least on one side with a cold seal composition according to Claim 9, **characterized in that** the cold seal composition is built up on a block copolymer basis comprising A-B or A-B-A block copolymers or mixtures thereof, phase A predominantly being polystyrene or derivatives thereof and phase B being ethylene, propylene, butylene, butadiene, isoprene or mixtures thereof.

11. Use of a backing material coated at least on one side with a cold seal composition according to one of the preceding claims, **characterized in that** the total styrene content in the polymer of the cold seal composition is lower than 65% by weight.

12. Use of a backing material coated at least on one side with a cold seal composition according to Claim 11, **characterized in that** the total styrene content in the polymer of the cold seal composition is lower than 40% by weight.

13. Use of a backing material coated at least on one side with a cold seal composition according to at least one of the preceding claims, **characterized in that** the cold seal composition is foamed with an inert gas and **in that** the degree of foaming was 5 to 85% by volume.

14. Use of a backing material coated at least on one side with a cold seal composition according to at least one of the preceding claims, **characterized in that** the backing material has an application of the cold seal compositions at least on two sides of from 6 to 180 g/m$^2$, the cold seal composition of side A comprising one or more types of SEBS diblock or triblock copolymer and the cold seal composition of side B comprising one or more types of SEPS diblock or triblock copolymer.

15. Use of a backing material coated at least on one side with a cold seal composition according to at least one of the preceding claims, **characterized in that** the cold seal composition is partially applied.

16. Use of a backing material coated at least on one side with a cold seal composition according to Claim 15, **characterized in that** the cold seal composition is applied in the form of polygeometrical domes.

17. Use of a backing material coated at least on one side with a cold seal composition according to at least one of the preceding claims, **characterized in that** the hotmelt cold seal composition is applied by halftone printing, thermal screen printing or gravure printing.

**18.** Use of a backing material coated at least on one side with a cold seal composition according to at least one of the preceding claims, **characterized in that** the cold seal composition comprises at least one aliphatic hydrocarbon and at least one aromatic hydrocarbon resin.

**19.** Use of a backing material coated at least on one side with a cold seal composition according to at least one of the preceding claims, **characterized in that** the cold seal composition has a Hazen number of less than three.

**20.** Use of a backing material coated at least on one side with a cold seal composition according to at least one of the preceding claims, **characterized in that**
the backing material coated with cold seal composition has an air permeability of more than 15 cm$^3$/(cm$^2$ × s) and a water vapour permeability of more than 500 g/(24 × s),
the cold seal composition comprises one or more types of SEBS and/or SEPS triblock copolymer,
the sum of the percentages by weight of all the block copolymers in the cold seal composition is 30% by weight to 70% by weight,
the cold seal composition comprises an aliphatic hydrocarbon resin and an aromatic hydrocarbon resin,
the backing material has an application of the cold seal compositions of from 6 to 180 g/m$^2$, and
the HAZEN number of the cold seal composition is less than 3.

**21.** Use of a backing material coated at least on one side with a cold seal composition according to at least one of the preceding claims, **characterized in that**
the backing material coated with cold seal composition has an air permeability of more than 15 cm$^3$/(cm$^2$ × s) and a water vapour permeability of more than 500 g/(24 × s),
the cold seal composition comprises one or more types of SEPS and/or SEBS A/B diblock copolymer,
the sum of the percentages by weight of all the block copolymers in the cold seal composition is 30% by weight to 70% by weight,
the cold seal composition comprises an aliphatic hydrocarbon resin and an aromatic hydrocarbon resin,
the backing material has an application of the cold seal compositions of from 6 to 180 g/m$^2$, and
the HAZEN number of the cold seal composition is less than 3.

**22.** Cable harness wrapped with an adhesive tape, adhesive tape according to at least one of the preceding claims being led around the cable harness in a spiral movement.

**Revendications**

**1.** Utilisation d'un matériau de support revêtu sur au moins une face d'une masse adhésive cohésive, adhérant sur elle-même, pour l'enrobage de faisceaux de câbles, **caractérisée en ce que** le matériau de support revêtu présente une force maximale de traction d'au moins 800 cN/cm et une force d'adhérence sur l'envers du support non inférieure à 10 cN/cm, et **en ce que** la masse adhésive est appliquée sur le matériau de support avec un poids surfacique de plus de 3 g/m$^2$, la masse adhésive et le matériau de support étant exempts de PVC.

**2.** Utilisation d'un matériau de support revêtu sur au moins une face d'une masse adhésive cohésive selon la revendication 1, **caractérisée en ce que** la masse adhésive est appliquée sur le matériau de support avec un poids surfacique compris entre 6 g/m$^2$ et 180 g/m$^2$.

**3.** Utilisation d'un matériau de support revêtu sur au moins une face d'une masse adhésive cohésive selon la revendication 2, **caractérisée en ce que** la masse adhésive est appliquée sur le matériau de support avec un poids surfacique compris entre 9 g/m$^2$ et 140 g/m$^2$.

**4.** Utilisation d'un matériau de support revêtu sur au moins une face d'une masse adhésive cohésive selon au moins l'une quelconque des revendications qui précèdent, **caractérisée en ce que** l'allongement à la traction maximale est de moins de 1000%.

**5.** Utilisation d'un matériau de support revêtu sur au moins une face d'une masse adhésive cohésive selon la revendication 4, **caractérisée en ce que** l'allongement à la traction maximale est de moins de 500%.

**6.** Utilisation d'un matériau de support revêtu sur au moins une face d'une masse adhésive cohésive selon au moins l'une quelconque des revendications qui précèdent, **caractérisée en ce que** le matériau de support consiste en un support textile tel qu'un non-tissé, un tissu ou un tricot.

7.  Utilisation d'un matériau de support revêtu sur au moins une face d'une masse adhésive cohésive selon au moins l'une quelconque des revendications qui précèdent, **caractérisée en ce que** la masse adhésive est une masse adhésive fusible.

8.  Utilisation d'un matériau de support revêtu sur au moins une face d'une masse adhésive cohésive selon au moins l'une quelconque des revendications qui précèdent, **caractérisée en ce que** la masse adhésive présente, pour une fréquence de 0,1 rad/s, une température de transition vitreuse dynamique complexe de moins de -30°C et/ou **en ce que** la masse adhésive présente, à une température de 25°C et une fréquence de 100 rad/s, une tan δ de moins de 0,4.

9.  Utilisation d'un matériau de support revêtu sur au moins une face d'une masse adhésive cohésive selon au moins l'une quelconque des revendications qui précèdent, **caractérisée en ce que** la masse adhésive est à base de copolymères blocs.

10. Utilisation d'un matériau de support revêtu sur au moins une face d'une masse adhésive cohésive selon la revendication 9, **caractérisée en ce que** la masse adhésive à base de copolymères blocs est constituée de copolymères blocs A-B ou A-B-A ou de leurs mélanges, la phase A étant principalement du polystyrène ou ses dérivés et la phase B étant de l'éthylène, du propylène, du butylène, du butadiène, de l'isoprène ou leurs mélanges.

11. Utilisation d'un matériau de support revêtu sur au moins une face d'une masse adhésive cohésive selon au moins l'une quelconque des revendications qui précèdent, **caractérisée en ce que** la fraction totale de styrène dans le polymère de la masse adhésive est de moins de 65% en poids.

12. Utilisation d'un matériau de support revêtu sur au moins une face d'une masse adhésive cohésive selon la revendication 11, **caractérisée en ce que** la fraction totale de styrène dans le polymère de la masse adhésive est de moins de 40% en poids.

13. Utilisation d'un matériau de support revêtu sur au moins une face d'une masse adhésive cohésive selon au moins l'une quelconque des revendications qui précèdent, **caractérisée en ce que** la masse adhésive est expansée au moyen d'un gaz inerte et **en ce que** le degré d'expansion est de 5 à 85% en volume.

14. Utilisation d'un matériau de support revêtu sur au moins une face d'une masse adhésive cohésive selon au moins l'une des revendications qui précèdent, **caractérisée en ce que** le matériau de support présente au moins sur les deux faces une application de la masse adhésive de 6 à 180 g/m$^2$, la masse adhésive de la face A contenant ou plusieurs type(s) de copolymères SEBS diblocs ou triblocs et la masse adhésive de la face B contenant un ou plusieurs type(s) de copolymères SEPS diblocs ou triblocs.

15. Utilisation d'un matériau de support revêtu sur au moins une face d'une masse adhésive cohésive selon au moins l'une des revendications qui précèdent, **caractérisée en ce que** la masse adhésive est appliquée de manière partielle.

16. Utilisation d'un matériau de support revêtu sur au moins une face d'une masse adhésive cohésive selon la revendication 15, **caractérisée en ce que** la masse adhésive est appliquée sous forme de calottes polygéométriques.

17. Utilisation d'un matériau de support revêtu sur au moins une face d'une masse adhésive cohésive selon au moins l'une des revendications qui précèdent, **caractérisée en ce que** la masse adhésive fusible est appliquée en quadrillage, par sérigraphie thermique ou impression hélio.

18. Utilisation d'un matériau de support revêtu sur au moins une face d'une masse adhésive cohésive selon au moins l'une des revendications qui précèdent, **caractérisée en ce que** la masse adhésive contient au moins une résine hydrocarbonée aliphatique et au moins une résine hydrocarbonée aromatique.

19. Utilisation d'un matériau de support revêtu sur au moins une face d'une masse adhésive cohésive selon au moins l'une quelconque des revendications qui précèdent, **caractérisée en ce que** la masse adhésive présente un indice Hazen de moins de trois.

**20.** Utilisation d'un matériau de support revêtu sur au moins une face d'une masse adhésive cohésive selon au moins l'une quelconque des revendications qui précèdent, **caractérisée en ce que** le matériau de support revêtu de masse adhésive présente une perméabilité à l'air de plus de 15 $cm^3$/($cm^2$ x s) et une perméabilité à la vapeur d'eau de plus de 500 g/(24 x s), **en ce que** la masse adhésive contient un ou plusieurs type(s) de copolymères SEBS et/ou SEPS triblocs, **en ce que** la somme des pourcentages en poids de tous les copolymères blocs dans la masse adhésive est de 30% en poids à 70% en poids, **en ce que** la masse adhésive contient une résine hydrocarbonée aliphatique et une aromatique, **en ce que** le matériau de support présente une application de masses adhésives de 6 à 180 g/$m^2$, **en ce que** l'indice Hazen est inférieur à 3.

**21.** Utilisation d'un matériau de support revêtu sur au moins une face d'une masse adhésive cohésive selon au moins l'une quelconque des revendications qui précèdent, **caractérisée en ce que** le matériau de support revêtu de masse adhésive présente une perméabilité à l'air de plus de 15 $cm^3$/($cm^2$ x s) et une perméabilité à la vapeur d'eau de plus de 500 g/(24 x s), **en ce que** la masse adhésive contient un ou plusieurs type(s) de copolymères SEBS et/ou SEPS diblocs A/B, **en ce que** la somme des pourcentages en poids de tous les copolymères blocs dans la masse adhésive est de 30% en poids à 70% en poids, **en ce que** la masse adhésive contient une résine hydrocarbonée aliphatique et une aromatique, **en ce que** le matériau de support présente une application de masses adhésives de 6 à 180 g/$m^2$, **en ce que** l'indice Hazen est inférieur à 3.

**22.** Faisceau de câbles enrobé d'une bande adhésive, la bande adhésive selon au moins l'une des revendications qui précèdent étant guidée en un mouvement de spirale autour du faisceau de câbles.

Figur 1

Figur 2

Figur 3